# FASCICULE DE BREVET EUROPEEN

(11) **EP 2 039 593 B1**
(45) Date de publication et mention de la délivrance du brevet: **27.10.2010**
(21) Numéro de dépôt: 08161687.2
(22) Date de dépôt: 01.08.2008
(51) Int. Cl.: B62D 25/06

(54) **Structure de carrosserie de véhicle à jonction renforcée entre la traverse avant de pavillon et la doublure du montant de baie de pare-brise**
Karosseriestruktur eines Kraftfahrzeugs mit verstärker Verbindung zwischen vorderem Querträger des Fahrzeugdachs und Futter des Ständers für die Windschutzscheibe
Vehicle bodywork structure with reinforced junction between the roof top front crossbar and the lining of the A-pillar of the windscreen.

(30) Priorité: 19.09.2007 FR 0757685
(43) Date de publication de la demande: 25.03.2009
(73) Titulaire: Peugeot Citroën Automobiles SA, 78140 Vélizy-Villacoublay (FR)
(72) Inventeur: Mauduit, Franck, 91490, MILLY LA FORET (FR); Deulot, Régis, 93290, TREMBLAY EN FRANCE (FR)
(74) Mandataire: Fernandez, Francis Lionel

(56) Documents cités:
- EP-B- 1 132 281
- DE-A1-102004 029 278
- DE-C1- 19 548 341
- JP-A- 6 001 262
- JP-A- 9 076 936
- JP-A- 2007 030 716
- US-A- 6 126 232

## Description

La présente invention concerne une structure de carrosserie de véhicule, en particulier de véhicule automobile, à jonction renforcée entre la traverse avant de pavillon et la doublure de montant de baie de pare-brise.

On a déjà cherché à renforcer des noeuds ou liaisons entre deux ou plusieurs éléments de carrosserie, afin d'éviter des déformations préjudiciables de ces éléments.

On connaît du document JP06001262 une structure de carrosserie de véhicule, en particulier de véhicule automobile à jonction renforcée entre la traverse avant de pavillon et la doublure de montant de baie de pare-brise, la traverse avant de pavillon présentant, dans sa partie arrière, un profil qui forme un corps creux situé entre la doublure de montant de baie de pare-brise et ladite traverse avant de pavillon.

On connaît, par exemple, selon le document EP 1 132 281 B1, une liaison entre le toit et la paroi latérale d'une carrosserie de véhicule automobile. Le toit est formé d'une couverture renforcée par un arceau, et la paroi latérale est formée d'une tôle extérieure, d'une tôle intérieure, ainsi que d'une tôle de renfort disposée entre lesdites deux tôles. Les régions d'extrémité correspondantes des tôles de paroi latérale et de l'arceau sont empilées en « sandwich » et liées entre elles dans une zone de chevauchement. Dans cette zone de chevauchement, la tôle intérieure présente une échancrure de la largeur de l'arceau. L'extrémité de l'arceau repose dans l'échancrure et est soudée à cet endroit à la tôle intérieure. L'arceau présente une surélévation par rapport au fond de l'échancrure. La tôle de renfort repose sur le sommet de la surélévation et est soudée à cet endroit à l'arceau.

Un autre exemple de carrosserie renforcée est donné par le document US 6 126 232, qui décrit une structure en forme de boîte. Cette structure est définie par une projection interne d'un panneau interne arrière formant une partie latérale d'une caisse de véhicule et par un élément extérieur d'un rail de pavillon s'étendant dans la direction transversale de la caisse à une partie supérieure de l'arrière du rail de pavillon. La structure en forme de boîte comporte une projection externe d'une pièce de renfort arrière, qui vient renforcer le panneau interne arrière, et une projection d'une pièce de renfort à articulation, qui vient renforcer l'élément extérieur du rail de pavillon et qui s'étend diagonalement à l'intérieur de la structure en forme de boîte, de façon à diviser ladite structure en une pluralité de sections fermées. Une partie arrière du panneau interne arrière et l'articulation de la pièce de renfort de panneau arrière comprennent un montant arrière. Avec cette structure, la liaison entre le montant arrière et le rail de pavillon offre une meilleure résistance aux couples de torsion et aux forces extérieures en provenance des coins des sections fermées.

Le but de la présente invention est de fournir une structure de carrosserie de véhicule à jonction renforcée entre la traverse avant de pavillon et la doublure de montant de baie de pare-brise, de façon à améliorer le comportement en flexion de la structure, notamment de la traverse avant de pavillon, par exemple lors de la prise en balancelle du véhicule sur la ligne de fabrication.

Un autre but de la présente invention est de fournir une telle structure de carrosserie à jonction renforcée, qui soit de conception simple, de fabrication aisée, qui soit robuste et économique.

Pour parvenir à ces buts, la présente invention a pour objet une structure de carrosserie de véhicule, en particulier de véhicule automobile, à jonction renforcée entre la traverse avant de pavillon et la doublure de montant de baie de pare-brise, dans laquelle la traverse avant de pavillon présente, dans sa partie arrière, un profil qui crée un corps creux entre la doublure de montant de baie de pare-brise et ladite traverse avant de pavillon et dans laquelle la traverse avant de pavillon et la doublure de montant de baie de pare-brise sont reliées ensemble dans la zone arrière de la traverse avant de pavillon par fixation de part et d'autre de la doublure d'arc de pavillon, de telle sorte que ladite doublure d' arc de pavillon est prise en « sandwich » entre ladite traverse avant et la doublure de montant de baie de pare-brise.

Selon le mode préféré de réalisation de l'invention, ce profil est sensiblement en forme de palier de section trapézoïdale.

De préférence, ce profil s'étend sur toute la longueur de la traverse avant de pavillon.

La face supérieure de ce profil constitue une zone de calage de la traverse avant de pavillon avec le pavillon.

La traverse avant de pavillon est de largeur telle qu'elle recouvre sensiblement la doublure de montant de baie de pare-brise.

De préférence, la traverse avant de pavillon et la doublure d'arc de pavillon sont assemblées directement ensemble par des points de soudure électrique.

De préférence également, la hauteur du profil formant corps creux est sensiblement du même ordre de grandeur que la distance entre la doublure d'arc de pavillon et le pavillon.

L'invention a également pour objet un véhicule automobile, dans lequel la jonction entre la traverse avant de pavillon et la doublure de montant de baie de pare-brise constitue une structure renforcée conforme à celle décrite ci-dessus dans ses grandes lignes.

D'autres buts, avantages et caractéristiques de l'invention apparaîtront dans la description qui suit d'un mode de réalisation de l'invention, non limitatif de l'objet et de la portée de la présente demande de brevet, accompagnée de dessins dans lesquels :
- la figure 1 représente, de manière schématique, la zone de la carrosserie concernée par la présente invention,
- la figure 2 est une vue en perspective des différents éléments de la jonction renforcée selon la présente invention, avant leur assemblage,
- la figure 3 est une vue en perspective des éléments de la figure 2, après leur assemblage,
- la figure 4 est une en coupe longitudinale selon la ligne IV - IV de l'assemblage de la figure 3 revêtu de la tôle du pavillon,
- la figure 5 est une en coupe transversale selon la ligne V - V de l'assemblage de la figure 3 revêtu de la tôle du pavillon, et
- la figure 6 est une vue de dessus de l'assemblage de la figure 3.

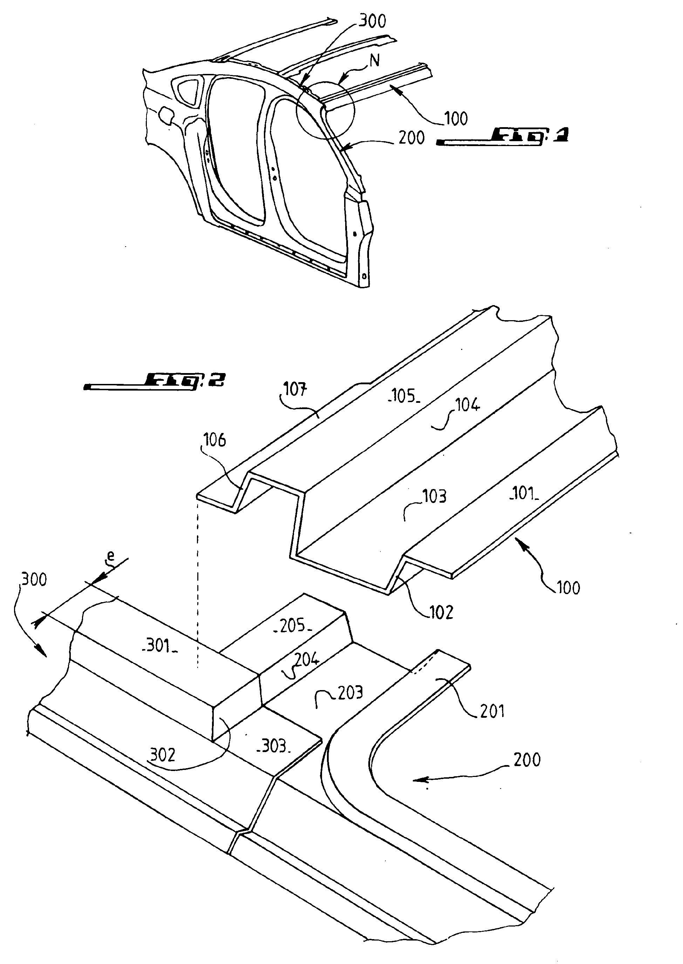

En référence à la figure 1, la zone concernée par la présente invention est à la jonction des éléments de carrosserie suivants : la traverse avant de pavillon, référencée 100, la doublure de montant de baie de pare-brise, référencée 200, et la doublure d'arc du pavillon référencée 300. Cette jonction des trois éléments ci-dessus de carrosserie est le noeud supérieur de baie de pare-brise, désignée N sur la figure 1.

En référence à la figure 2, la traverse avant de pavillon 100 est une tôle qui s'étend transversalement sur la largeur de la carrosserie du véhicule, dont la section transversale est profilée par pliage en ligne brisée formée de plusieurs tronçons adjacents 101 à 107 : les tronçons d'extrémité 101 et 107, le tronçon supérieur 105 et le tronçon inférieur 103, les tronçons 102, 104 et 106 étant des tronçons de liaison.

La doublure de montant de baie de pare-brise 200 est une tôle dont la partie transversale située sous la traverse avant 100 présente aussi une section profilée en ligne brisée, adaptée à coopérer par concordance de formes avec le profil en ligne brisée de la section de la traverse avant de pavillon 100. Le profil de la doublure de montant de baie de pare-brise 200 est formé de cinq tronçons adjacents 201 à 205 : les tronçons d'extrémités 201 et 205, le tronçon inférieur 203 et les tronçons de liaison 202 et 204.

La doublure d'arc de pavillon 300 présente à son extrémité assemblée aux deux éléments précédents de carrosserie 100 et 200 un profil qui est également en ligne brisée et coopère par concordance de formes avec les deux éléments 100 et 200, sur une largeur référencée « e ». Ce profil comporte ainsi un tronçon d'extrémité 303, relié par un tronçon de liaison 302 à son tronçon principal supérieur 301.

Selon le principe de la présente invention, il est créé un mini corps creux en zone arrière de la traverse avant de pavillon 100, par la forme même des profils des éléments assemblés de la jonction.

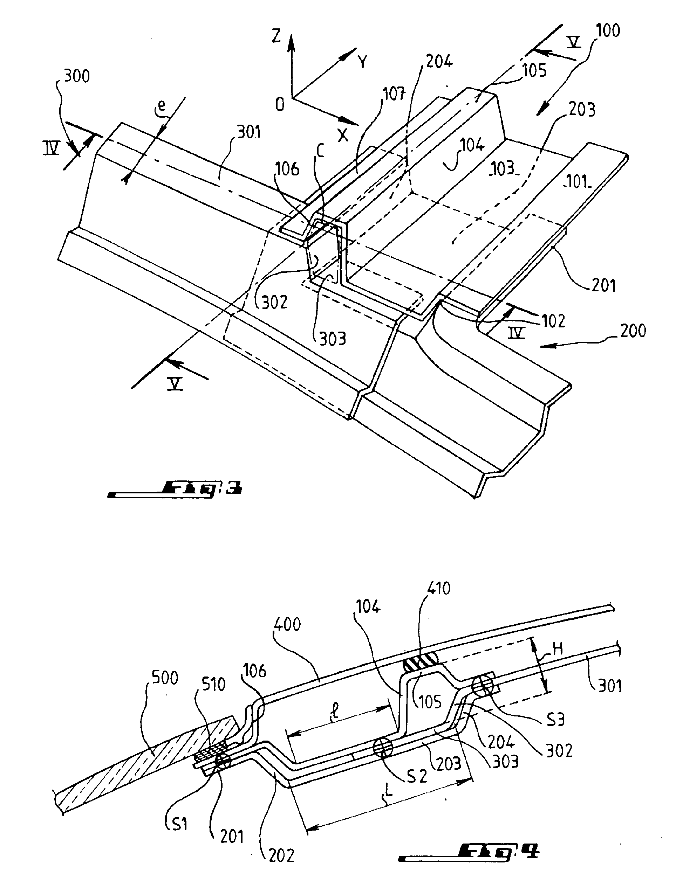

Comme on peut le voir sur la figure 3, qui représente le noeud supérieur de baie de pare-brise assemblé, ce mini corps creux, référencé C, est le résultat des profils conjugués des sections des éléments de carrosserie 100, 200 et 300 à leur jonction. De façon plus précise, en référence aux figures 3 et 4, le corps creux C est un corps cylindrique, d'axe transversal en Y, de section sensiblement pentagonale, dont le volume est défini par les trois tronçons adjacents 104, 105, 106 de la traverse avant de pavillon 100 en appui sur les deux tronçons 302 et 303 de la doublure d'arc de pavillon sur une distance transversale « e » et sur les tronçons 203 et 204 sur la distance transversale complémentaire (en Y). A cette fin, la largeur « 1 » du tronçon inférieur 103 de traverse avant 100 est inférieure à la largeur « L » du tronçon inférieur 203 de la doublure de montant de baie de pare-brise 200 sur laquelle vient se plaquer le tronçon 103, la différence entre les valeurs de « L » et « 1 » représentant sensiblement la largeur du corps creux C.

Le corps creux présente une hauteur « H » rendue possible par la configuration en cuvette de la section de la doublure de montant de baie de pare-brise 200 et la ligne brisée en surélévation de la section de la traverse avant de pavillon 100.

Le corps creux C, ainsi formé en zone arrière de la traverse avant de pavillon 100, permet d'améliorer la résistance mécanique à la déformation de la carrosserie, en particulier dans la zone des noeuds supérieurs de pare-brise. Cette amélioration de la résistance mécanique à la déformation permet d'empêcher principalement la déformation plastique permanente de la traverse de baie de pare-brise lors de la prise du véhicule en balancelle sur la ligne de montage.

Le profil de la zone arrière de la traverse avant de pavillon 100, qui forme le corps creux C, présente sensiblement une forme de trapèze tronqué sur l'un de ses côtés (le côté 106), avec une base supérieure 105 sensiblement horizontale. Cette base 105 sert de support au calage 410 de la tôle de pavillon 400.

Des points de soudure électrique S1, S2 et S3 lient directement la traverse avant de pavillon 100 avec la zone d'arc de pavillon, en particulier avec la doublure d'arc de pavillon 300.

La configuration des éléments de la structure de carrosserie selon la présente invention permet de dissocier les zones de soudure (S1, S2, S3) de la zone de calage (410) de pavillon, par conséquent de mieux exploiter le plus grande largeur de traverse.

La référence 510 désigne la ligne de colle du pare-brise 500 sur le pavillon 400 et le noeud supérieur de baie de pare-brise.

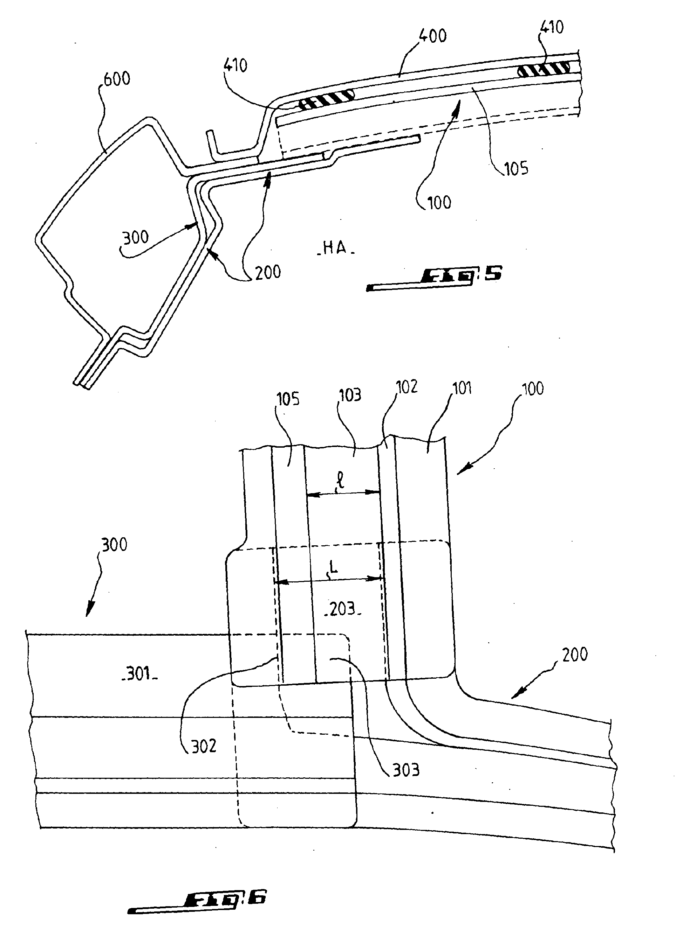

La figure 5 est une vue en coupe transversale selon la ligne V - V du noeud supérieur de baie de pare-brise assemblé de la figure 3, sur lequel ont été fixées les tôles de pavillon 400 et d'arc de pavillon 600. La référence HA désigne le côté d'habitacle.

La figure 6 est une vue de dessus de l'assemblage des éléments de la structure de carrosserie de l'invention, sur laquelle on peut voir que la traverse avant de pavillon 100 recouvre la doublure de montant de baie de pare-brise 200 et la doublure d'arc de pavillon 300. Le recouvrement est prolongé au plus près de l'arc de pavillon.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Structure de carrosserie de véhicule, en particulier de véhicule automobile à jonction renforcée entre la traverse avant de pavillon (100) et la doublure de montant de baie de pare-brise (200), la traverse avant de pavillon (100) présentant, dans sa partie arrière, un profil qui forme un corps creux (C) situé entre la doublure de montant de baie de pare-brise (200) et ladite traverse avant de pavillon (100), **caractérisée en ce que** la traverse avant de pavillon (100) et la doublure de montant de baie de pare-brise (200) sont reliées ensemble dans la zone arrière de la traverse avant de pavillon (100) par fixation de part et d'autre de la doublure d'arc de pavillon (300), de telle sorte que ladite doublure d'arc de pavillon (300) est prise en « sandwich » entre ladite traverse avant (100) et la doublure de montant de baie de pare-brise (200).

2. Structure selon la revendication 1, **caractérisée en ce que** la section dudit profil formant un corps creux (C) est sensiblement de la forme d'un trapèze.

3. Structure selon l'une quelconque des revendications 1 à 2, **caractérisée en ce que** ledit profil formant un corps creux (C) s'étend sur toute la longueur de la traverse avant de pavillon (100).

4. Structure selon l'une quelconque des revendications 1 à 3, **caractérisée en ce que** ledit profil formant un corps creux sert (C), dans sa partie supérieure (105), de zone de calage avec le pavillon (400).

5. Structure selon l'une quelconque des revendications 1 à 4, **caractérisée en ce que** la traverse avant de pavillon (100) est de largeur telle qu'elle recouvre sensiblement la largeur de la doublure de montant de baie de pare-brise (200).

6. Structure selon l'une quelconque des revendications 1 à 5, **caractérisée en ce que** la traverse avant de pavillon (100) et la doublure d'arc de pavillon (300) sont assemblées directement ensemble par des points de soudure électrique (S2, S3).

7. Structure selon l'une quelconque des revendications 1 à 3, **caractérisée en ce que** la hauteur (H) du profil formant corps creux (C) est sensiblement du même ordre de grandeur que la distance entre la doublure d'arc de pavillon (300) et le pavillon (400).

8. Véhicule automobile, **caractérisé en ce que** la jonction entre la traverse avant de pavillon (100) et la doublure de montant de baie de pare-brise (200) est une structure de carrosserie renforcée conforme à l'une quelconque des revendications 1 à 7.

## Claims

1. A vehicle bodywork structure, in particular of an automobile vehicle with reinforced junction between the roof front cross member (100) and the windscreen window post liner (200), the roof front cross member (100) having, in its rear part, a profile which forms a hollow body (C) situated between the windscreen window post liner (200) and the said roof front cross member (100), **characterized in that** the roof front cross member (100) and the windscreen window post liner (200) are connected together in the rear zone of the roof front cross member (100) by fixing on either side of the roof arch liner (300), such that the said roof arch liner (300) is "sandwiched" between the said front cross member (100) and the windscreen window post liner (200).

2. The structure according to Claim 1, **characterized in that** the section of the said profile forming a hollow body (C) is substantially in the shape of a trapezium.

3. The structure according to any one of Claims 1 to 2, **characterized in that** the said profile forming a hollow body (C) extends over the entire length of the roof front cross member (100).

4. The structure according to any one of Claims 1 to 3, **characterized in that** the said profile forming a hollow body (C) serves, in its upper part (105), as a shimming zone with the roof (400).

5. The structure according to any one of Claims 1 to 4, **characterized in that** the roof front cross member (100) has a width such that it covers substantially the width of the windscreen window post liner (200).

6. The structure according to any one of Claims 1 to 5, **characterized in that** the roof front cross member (100) and the roof arch liner (300) are assembled directly together by electric welding points (S2, S3).

7. The structure according to any one of Claims 1 to 3, **characterized in that** the height (H) of the profile forming a hollow body (C) is substantially of the same order of magnitude as the distance between the roof arch liner (300) and the roof (400).

8. An automobile vehicle, **characterized in that** the junction between the roof front cross member (100) and the windscreen window post liner (200) is a reinforced bodywork structure in accordance with any one of Claims 1 to 7.

## Patentansprüche

1. Fahrzeugkarosseriestruktur, insbesondere für Kraftfahrzeug, mit verstärkter Verbindung zwischen dem vorderen Dachquerträger (100) und der Strebenauskleidung der Windschutzscheibenöffnung (200), wobei der vordere Dachquerträger (100) in seinem hinteren Teil ein Profil aufweist, das einen Hohlkörper (C) bildet, der sich zwischen der Strebenauskleidung der Windschutzscheibenöffnung (200) und dem vorderen Dachquerträger (100) erstreckt, **dadurch gekennzeichnet, dass** der vordere Dachquerträger (100) und die Strebenverkleidung der Windschutzscheibenöffnung (200) miteinander in dem hinteren Bereich des vorderen Dachquerträgers (100) durch Befestigen zu beiden Seiten der Dachbogenauskleidung (300) derart verbunden sind, dass die Dachbogenauskleidung (300) zwischen dem vorderen Querträger (100) und der Strebenverkleidung der Windschutzscheibenöffnung (200) ins "Sandwich" genommen wird.

2. Struktur nach Anspruch 1, **dadurch gekennzeichnet, dass** der Querschnitt des Profils, das einen Hohlkörper (C) bildet, im Wesentlichen die Form eines Trapezes hat.

3. Struktur nach einem der Ansprüche 1 bis 2, **dadurch gekennzeichnet, dass** sich das Profil, das einen Hohlkörper (C) bildet, auf der ganzen Länge des vorderen Dachquerträgers (100) erstreckt.

4. Struktur nach einem der Ansprüche 1 bis 3, **dadurch gekennzeichnet, dass** das Profil, das einen Hohlkörper (C) bildet, in seinem oberen Teil (105) als Verkeilungsbereich mit dem Dach (400) dient.

5. Struktur nach einem der Ansprüche 1 bis 4, **dadurch gekennzeichnet, dass** der vordere Dachquerträger (100) eine Breite derart hat, dass er im Wesentlichen die Breite der Strebenauskleidung in der Windschutzscheibenöffnung (200) abdeckt.

6. Struktur nach einem der Ansprüche 1 bis 5, **dadurch gekennzeichnet, dass** der vordere Dachquerträger (100) und die Dachbogenauskleidung (300) gemeinsam direkt durch Elektroschweißpunkte (S2, S3) verbunden sind.

7. Struktur nach einem der Ansprüche 1 bis 3, **dadurch gekennzeichnet, dass** die Höhe (H) des Profils, das einen Hohlkörper (C) bildet, im Wesentlichen in der gleichen Größenordnung liegt wie die Entfernung zwischen der Dachbogenauskleidung (300) und dem Dach (400).

8. Kraftfahrzeug, **dadurch gekennzeichnet, dass** die Verbindung zwischen dem vorderen Dachquerträger (100) und der Strebenauskleidung der Windschutzscheibenöffnung (200) eine verstärkte Karosseriestruktur ist, die einem der Ansprüche 1 bis 7 entspricht.
